(19) Europäisches Patentamt
European Patent Office
Office européen des brevets

(11) Publication number : **0 649 676 A1**

(12) # EUROPEAN PATENT APPLICATION

(21) Application number : **94402350.6**

(51) Int. Cl.$^6$ : **B01D 67/00,** B01D 71/44

(22) Date of filing : **19.10.94**

(30) Priority : **20.10.93 US 138309**

(43) Date of publication of application :
**26.04.95 Bulletin 95/17**

(84) Designated Contracting States :
**DE FR GB NL**

(71) Applicant : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventor : **Roman, Ian Charles**
**1311 Fairview Avenue**
**Wilmington, Delaware 19809 (US)**

(74) Representative : **Le Moenner, Gabriel et al**
**L'AIR LIQUIDE S.A.,**
**Service Propriété Industrielle,**
**75, quai d'Orsay**
**F-75321 Paris Cédex 07 (FR)**

(54) **Fluoropolymer posttreatment of gas separation membranes.**

(57) A novel gas separation membrane and a process for applying a fluoropolymer, preferably an amorphous polymer of perfluoro-2,2-dimethyl-1,3-dioxole, to a gas separation membrane to improve the permselectivity of the membrane with respect to at least one pair of gases is disclosed.

EP 0 649 676 A1

## BACKGROUND OF THE INVENTION

## FIELD OF THE INVENTION

The present invention relates to a process for improving the selectivity of a gas separation membrane wherein a fluoropolymer is applied to the surface of the membrane to effectively seal defects in the membrane.

## PRIOR ART

Polymeric membranes are well known for the separation of one or more gases from a mixture of gases. The selectivity of one gas over another in a multicomponent mixture by permeation through a gas separation membrane is controlled, in part, by the integrity of the separating layer of the membrane. To obtain the intrinsic gas selectivity of a membrane, a substantially pinhole-free separating layer must be formed in the membrane formation process. The integrity of this separating layer must be maintained throughout the gas separation module to retain a high gas membrane selectivity. This idealized pinhole-free membrane separating layer could be prepared by increasing the thickness of the layer. In doing so, holes, defects or imperfections would not be able to protrude through the separating layer; however, this results in a reduction of the gas permeation rate through the membrane.

Imperfections and defects in the dense separating layer of gas membranes arise in the membrane formation process and in subsequent membrane handling, module fabrication and system fabrication steps. The effective gas membrane separating efficiency can be advantageously enhanced by chemical treatment of the membranes to heal or seal most of the imperfections and defects.

It is known to prepare composite membranes and/or posttreat membranes with materials that seal or heal defects or improve the stability of the membrane. For example, U.S. Patents 3,616,607 and 3,775,303 exemplify gas separation membranes having superimposed membranes on a porous support.

U.S. Patent 4,230,463 deals broadly with the posttreatment of fluid separation membranes. It describes a wide variety of membranes for liquid and gas separations, particularly a multicomponent membrane where the separation properties of the membrane are principally determined by the porous separation membrane as opposed to the material of the coating. The coating cures defects in the surface of the membrane. U.S. Patent 4,767,422 also discloses a method of posttreating composite membranes to cure defects in the thin separation layer. U.S. Patent 4,728,345 describes a multicomponent membrane for gas separation having a polyphosphazene coating in occluding contact with a porous separation membrane for the purpose of improving stability of the membrane when exposed to aromatic and aliphatic hydrocarbons contained in a gaseous mixture.

EPO Patent Application 0,337,499 discloses a gas separation membrane with a covering layer formed from a selective film. The covering layer is made from a polymer having a critical surface tension not larger than 30 dynes/cm, such as poly-4-methylpentene-1, fluorinated alkyl methacrylate and polymethyl fluorinated alkyl siloxane.

U.S. Reissue Patent 33,273 describes a method of improving the characteristics of separatory membranes by the deposition of a fluorinated amphiphilic compound in an oriented layer on the surface of the membrane so as to increase membrane selectivity and counteract membrane surface properties leading to fouling caused by colloidal materials.

U.S. Patent 4,613,625; 4,661,526 and 4,668,706 disclose a multicomponent ultrafiltration separation membrane comprising an aliphatic polyamide porous anisotropic substrate and a coating which is the condensation product of the substrate and any of certain crosslinking compounds.

U.S. Patent 4,484,935 discloses a multicomponent gas separation membrane comprising a porous anisotropic substrate membrane and a coating which is the condensation product of reactive poly(dimethylsiloxane) with any of certain crosslinking compounds with modified silane monomers.

U.S. Patent 4,505,985 discloses a multicomponent separation membrane comprising a porous substrate membrane and a coating based on silicic acid heteropolycondensates produced by hydrolytic polycondensation of a silicic acid derivative in the presence of water with an optional condensation catalyst and modifiers.

U.S. Patent 5,051,114 discloses a process for improving the selectivity of a gas separation membrane wherein a reactive monomer or monomers are applied to the surface of the membrane and allowed to polymerize to effectively seal defects in the membrane.

The prior art references do not, however, teach gas separation membrane posttreated with a fluoropolymer to improve selectivity. The materials and processes disclosed herein achieve this goal and surpass that taught in the prior art.

## SUMMARY OF THE INVENTION

The present invention relates to novel gas separation membranes and a process for effectively healing or sealing defects in a membrane to improve the permselectivity of the membrane with respect to at least two or more gases. The treatment involves applying a fluoropolymer to the surface of the membrane. The fluoropolymer advantageously seals defects on the membrane. Advantageously, the fluoropolymer coating does not significantly inhibit permeation of the fluids to be separated, does not significantly lower the membrane's selectivity, is chemically resistant to the fluids to be separated and does not decompose at high temperatures. Suitable coatings include polymers having an aliphatic ring structure containing fluorine, preferably amorphous polymers of perfluoro-2,2-dimethyl-1,3-dioxole. The posttreated membranes are widely useful in producing nitrogen-enriched air for applications such as nitrogen blanketing for food, pharmaceutical uses and fuel storage applications. These membranes are also effective in the separation of other gases including carbon dioxide/methane, hydrogen/nitrogen and hydrogen/methane.

## BRIEF DESCRIPTION OF THE DRAWINGS

Figure 1 is a graph showing the oxygen flux of the inventive gas separation membrane at different temperatures.

Figure 2 is a graph showing the oxygen/nitrogen selectivity of the inventive membrane at different temperatures.

## DETAILED DESCRIPTION

Fluid separation membranes are well known in the art. Many commercial gas separation membranes are asymmetric in nature. They are made by casting a film or extruding a hollow fiber from a solution of a polymer in a solvent mixture, evaporating a portion of the solvent from one side of the film or the outside of the fiber and quenching in a nonsolvent. The resulting asymmetric membrane is characterized by a thin film of polymer supported by a generally cellular substructure. This provides a membrane having a thin effective separation member, which results in a high flux or permeation rate, which is highly desirable. However, this effort to form a highly permeable membrane also leads to the formation of submicroscopic holes or defects which pass gases indiscriminately causing the membrane to have an effective separation value for most pairs of gases which is less than the intrinsic separation value of the polymer from which the membrane is made. Subsequent handling of the membrane may also disadvantageously result in holes, defects or imperfections. The separating layer of so-called multicomponent or composite gas separation membranes may also have disadvantageous holes, defects or imperfections which impairs the ability of the membrane to separate two or more gases from a mixture of gases.

The process of the present invention is most effective on membranes which have a relatively broad range of pore sizes and pore distributions. The average hole diameter protruding through the dense separating layer of the separation membrane may vary widely and may range from approximately 1 to 1,000 angstroms. Preferably, the membranes have pores of a predetermined narrow range of size. The size can be varied at will within certain limits, and for the separation of gaseous mixtures membranes advantageously have a pore size of definite value, which can be varied in membranes for various purposes from about 2.5 angstrom to about 10 angstrom, preferably 3 to 5 angstrom.

Membranes of flat configuration (in sheet form) are generally of a thickness of from about 1 μm to abut 50 μm, although for different purposes different thicknesses can be used. With asymmetrical flat membranes the thickness of the effective separating layer of the membrane can be even thinner than 1 μm. When the membrane is used in the form of hollow fibers, the diameter will generally vary between 75 and 1000 microns, preferably 90 to 350 microns with a wall thickness of about 20 to 300 microns.

A wide range of hole sizes and distributions can be advantageously sealed or healed by the processes described herein. The fraction of pores which protrude through the dense separating layer of a separation membrane can be estimated by the selectivity of one gas over another gas for at least one pair of gases permeating through the membrane. The difference between the intrinsic separation factor for a material and the separation factor for a membrane prepared from that material can be related to the contribution of submicroscopic holes which protrude through the membrane's dense separation layer. These holes essentially pass gases indiscriminately.

The process of the present invention entails the application of a fluoropolymer within the gas separation membrane or on the surface of the gas separation membrane. The fluoropolymer may be diluted in a solvent, preferably a liquid that does not significantly swell the membrane and damage the membrane morphology.

After application, the fluoropolymer effectively seals defects and imperfections of the membrane, with consequent enhanced gas/gas selectivity. It is believed that the fluoropolymer forms a non-continuous layer on the surface of the membrane.

Suitable fluoropolymer coatings include polymers having an aliphatic ring structure containing fluorine, for example an amorphous polymer of perfluoro-2,2-dimethyl-1,3-dioxole. In embodiments, the polymer is a homopolymer of perfluoro-2,2-dimethyl-1,3-dioxole. In other embodiments, the polymer is a copolymer of perfluoro-2,2-dimethyl-1,3-dioxole, including copolymers having a complementary amount of at least one monomer selected from of tetrafluoroethylene, perfluoromethyl vinyl ether, vinylidene fluoride and chlorotrifluoroethylene. In preferred embodiments, the polymer is a dipolymer of perfluoro-2,2-dimethyl-1,3-dioxole and a complementary amount of tetrafluoroethylene, especially such a polymer containing 65-99 mole % of perfluoro-2,2-dimethyl-1,3-dioxole. The polymer preferably has a glass transition temperature of at least 100°C. Glass transition temperature ($T_g$) is known in the art and is the temperature at which the polymer changes from a brittle, vitreous or glassy state to a rubbery or plastic state. Examples of dipolymers are described in further detail in U.S. Patent Nos. 4,754,009 and 4,935,477; both of E. N. Squire. The polymer may, for example, be an amorphous copolymer of perfluoro(2,2-dimethyl-1,3-dioxole) with a complementary amount of at least one other comonomer, said copolymer being selected from dipolymers with perfluoro(butenyl vinyl ether) and terpolymers with perfluoro(butenyl vinyl ether) and with a third comonomer, wherein the third comonomer can be (a) a perhaloolefin in which halogen is fluorine or chlorine, or (b) a perfluoro(alkyl vinyl ether); the amount of the third comonomer, when present, preferably being at most 40 mole % of the total composition. Polymerization is performed by methods known in the art.

The glass transition temperature of the amorphous polymer will vary with the actual polymer of the membrane, especially the amount of tetrafluoroethylene or other comonomer that may be present. Examples of $T_g$ are shown in Figure 1 of the aforementioned U.S. Patent No. 4,754,009 of E. N. Squire as ranging from about 260°C for dipolymers with tetrafluoroethylene having low amounts of tetrafluoroethylene comonomer down to less than 100°C for the dipolymers containing at least 60 mole % of tetrafluoroethylene.

Other suitable fluoropolymer coatings having an aliphatic ring structure containing fluorine are described in U.S. Patent No. 4,897,457 of Nakamura et al. and Japanese Published Patent Application Kokai 4-198918 of Nakayama et al.; e.g., a fluorine-containing thermoplastic resinous polymer consisting of repeating units represented by the following general formula:

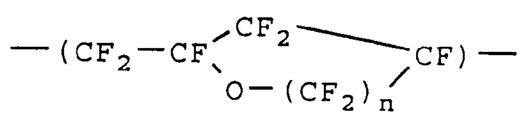

and or

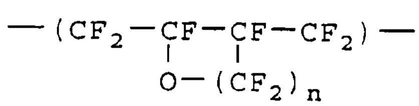

(where: n is an integer of 1 or 2); and copolymers thereof.

In preferred embodiments of the membranes and methods of the present invention, the polymer is a copolymer of perfluoro-2,2-dimethyl-1,3-dioxole, expecially a copolymer having a complementary amount of at least one monomer selected from tetrafluoroethylene, perfluoromethyl vinyl ether, vinylidene fluoride and chlorotrifluoroethylene.

The preferred coating is TEFLON® AF (commercially available from E. I. du Pont de Nemours and Company) which is a dipolymer of perfluoro-2,2-dimethyl-1,3-dioxole and tetrafluoroethylene.

While any suitable method can be employed, the method by which the coating is applied can have some bearing on the overall performance of the composite membranes. The membranes according to the invention can be prepared for instance, by coating a membrane with a substance containing the material of the coating such that the coating has a resistance to fluid flow which is low in comparison to the total resistance of the multicomponent membrane. The coating may be applied in any suitable manner; e.g., by a coating operation such as spraying, brushing, immersion in an essentially liquid substance comprising the material of the coating or the like. The material of the coating is preferably contained in an essentially liquid substance when applied and may be in a dispersion or solution using a dispersion or solvent for the material of the coating which is

substantially a nonsolvent for the material of the membrane. Advantageously, the substance containing the material of the coating is applied to one surface of the separation membrane. However, the invention itself is not limited by the particular method by which the material of the coating is applied. The fluoropolymer coatings disclosed herein offer great advantages over prior art posttreatments.

The fluoropolymer coating is easily dispersed or solubilized so that it may be coated on the surface of the membrane. In addition, the coating is chemically inert and resistant to decomposition at elevated temperatures.

The solvent or dispersant may be a wide range of compounds known in the art, including without limitation, alcohols, especially lower alcohols, and fluorinated hydrocarbons. Fluorinated hydrocarbons useful as solvents herein include fluorinated ethers of the FREON® E series (structure below); perfluorotetrahydrofuran and perfluorinated substituted tetrahydrofurans such as perfluoropropyltetrahydrofuran and perfluorobutyltetrahydrofuran; perfluorotripropylamine, perfluorotributylamine and perfluorotrihexylamine; fluorinated alkanes and cycloalkanes, including perfluoro n-hexane, perfluoro n-heptane, perfluoro n-octane, 1-hydro-perfluorohexane, perfluorocyclohexane, perfluoromethylcyclohexane, perfluoro-1,3-dimethylcyclohexane, 1,1,2,2,3,4-hexafluoro-3,4-bis(trifluoromethyl)cyclobutane, 1,1,2,3,3,4-hexafluoro-2,4-bis(trifluoromethyl)cyclobutane; perfluorobenzene, perfluorodecalin and perfluorotetradecahydrophenanthrene. Mixtures of these compounds are included.

Preferred solvents are FREON® E1 and FREON® E2; 1,1,2,2,3,4-hexafluoro-3,4-bis(trifluoromethyl)cyclobutaneand 1,1,2,3,3,4-hexafluoro-2,4-bis(trifluoromethyl)cyclobutane; perfluorotetrahydrofuran and perfluorobutyltetrahydrofuran; perfluoro n-hexane and perfluoro n-heptane.

The chemical structure of the FREON® E series is:

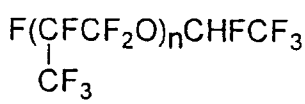

where the E number is equal to n.

Particularly advantageous fluoropolymer coatings have relatively high permeability constants for fluids such that the presence of a coating does not unduly reduce the permeation rate of the multicomponent membrane for desired components. Advantageously, the fluoropolymer coating does not significantly inhibit permeation of the fluids to be separated, does not significantly lower the membrane's selectivity, is chemically resistant to the fluids to be separated and does not decompose at high temperatures.

A larger range of pore sizes can be effectively plugged by this procedure than is disclosed in the prior art. For example, U.S. Patent 3,980,456 discloses the use of a preformed organopolysiloxane-polycarbonate copolymer sealing material. This procedure suffers in that the polymeric sealing material cannot effectively intrude into pores to plug them and is, therefore, only effective by applying a thin coating on top of the membrane material. This causes a substantial loss in membrane productivity. U.S. Patent 4,230,463, teaches that membrane sealing materials are only effective if their molecular size is sufficiently large to preclude being drawn through the pore of the porous separation membrane during coating and/or separation operations.

U.S. Patent 4,230,463 suffers from environmental degradation encountered under some operation conditions. The membrane posttreatment disclosed herein does not suffer from this difficulty.

Based on estimates of the average pore diameter of the membrane, materials for the coating of appropriate molecular size can be chosen. If the molecular size of the material of the coating is too large to be accommodated by the pores of the membrane, the material may not be useful. If, on the other hand, the molecular size of the material for the coating is too small, it may be drawn through the pores of the membrane during coating and/or separation operations. Thus, with membranes having larger pores, it may be desirable to employ materials for coating having larger molecular sizes. When the pores are in a wide variety of sizes, it may be desirable to employ two or more coating materials of different molecular sizes; e.g., by applying the materials of the coating in order of their increasing molecular sizes.

This sealing procedure is useful for a wide variety of membrane compositions and types. Membrane materials may include polyamides, polyimides, polyesters, polyethers, polyether ketones, polyether imides, polyethylenes, polyacetylenes, polyether sulfones, polysulfones, polysiloxanes, polyvinylidene fluoride, polybenzimidazoles polybenzoxazoles, polyacrylonitrile, cellulose acetate, polyazoaromatics and copolymers thereof. This should not be considered limiting. The healing or sealing procedure of the present invention is substantially useful for any membrane material composition.

The membranes may be fabricated in various geometrical configurations, such as sheet formed membranes and hollow fibers. The membranes may be symmetrical, asymmetrical, single component or composite. The polymeric substrate membrane is preferably in the form of a hollow fiber having an outside diameter of

about 75 to 1,000 microns and preferably 90 to 350 microns, and a wall thickness of about 20 to 300 microns. Preferably the diameter of the bore of the fiber is about one quarter to three quarters the outside diameter of the fiber. The preferred aromatic polyimide membranes are porous with the average cross-sectional diameter of the pores varying within the range of 5 to 20,000 angstroms. The pore sizes are greater in the interior of the membrane and lesser near the surfaces of the membrane, such that the membrane is anisotropic or asymmetric. The porosity of the membrane is sufficient that the void volume of the membrane is within the range of 10 to 90, preferably about 30 to 70 percent based on the superficial volume: i.e., the volume contained within the gross dimensions of the porous separation membrane.

The intimate mechanistic details of this coating procedure are not well understood. They may vary for different material compositions. It is clear that the procedure reduces the effects that membrane defects and imperfections have on the gas productivity. This is believed to be due to healing of these defects and imperfections through plugging or partial plugging.

The pressure normalized flux or permeance of gases through membranes can be defined as:

$$1\ \mathrm{GPU} = \frac{10^{-6}\ \mathrm{cm}^3\ (\mathrm{STP})}{\mathrm{cm}^2\ \mathrm{x\ sec.\ x\ cm\ Hg}}$$

wherein cm$^3$ (STP)/sec is the flux (flow rate) in units volume per seconds of permeated gas at standard temperatures and pressure, cm$^2$ is the surface area of membrane available for permeation, and cm Hg is the partial pressure difference of a given gas across the membrane (or driving force).

The $O_2$ permeance and $O_2/N_2$ selectivity are also used to assess the thickness of the membrane skin and the resistance to flow added by the caulking/coating layer of fluoropolymer. The effective skin thickness (EST) is in essence a direct measure of the resistance to gas flow in the membrane, which is roughly equal to the skin thickness, assuming that most of the resistance to flow is in the skin. The EST is derived from the $O_2$ permeability and $O_2/N_2$ permselectivity in the polymer of the skin by the following formula:

$$\mathrm{EST} = [1 + (1 - S_m/S_p)/(S_m/0.94 - 1)]\mathrm{Permeability}\ (O_2)/\mathrm{Permeance}(O_2)$$

where:

EST = effective skin thickness, in Ångström

$S_m$ = $O_2/N_2$ selectivity of the membrane

$S_p$ = $O_2/N_2$ permselectivity of the polymer

Permeance ($O_2$) in GPU

Permeability ($O_2$) in $10^{-10}$ cm$^3$(STP) cm/cm$^2$ sec cm Hg

After treatment, an EST smaller than 1500 Ångström is useful; and EST smaller than about 500Å is preferred.

The increase in EST following treatment with the fluoropolymer is an indicator of the overall resistance to gas flow added by (a) the coating of fluoropolymer, (b) slight change to the membrane morphology caused by the solvent of the treatment solution, and (c) possible slight densification (loss of free volume) of the polymer itself in the separating layer, which is believed to be induced by the solvent of the treatment solution.

It is believed that some level of coating of the fluoropolymer on the membrane surface will inevitably accompany pore caulking. The coating may or may not be continuous; either way, it adds resistance to gas flow. It is desirable that the resistance to flow added by the treatment be small. The EST after treatment is calculated with the simplifying assumption that all the resistance to flow is still in the membrane skin, rather than contributed by both the skin and a possible fluoropolymer coating in series. The EST of the treated membrane is useful for the comparison of different treatments, and especially useful for comparison with thick skin integrally-skinned membranes of the same polymer.

The invention as described herein is useful for the separation of, for example, oxygen from nitrogen or air; hydrogen from at least one of carbon monoxide, carbon dioxide, helium, nitrogen, oxygen, argon, hydrogen sulfide, nitrous oxide, ammonia, and hydrocarbon of I to about 5 carbon atoms, especially methane, ethane and ethylene; ammonia from at least one of hydrogen, nitrogen, argon, and hydrocarbon of 1 to about 5 carbon atoms; e.g., methane; carbon dioxide from at least one of carbon monoxide, nitrogen and hydrocarbon of 1 to about 5 carbon atoms; e.g., methane; hydrogen sulfide from hydrocarbon of 1 to about 5 carbon atoms; for instance, methane, ethane, or ethylene; and carbon monoxide from at least one of hydrogen, helium, nitrogen, and hydrocarbon of 1 to about 5 carbon atoms. It is emphasized that the invention is also useful for liquid separations and is not restricted to these particular separation applications of gases nor the specific multicomponent membranes in the examples.

## EXAMPLES

### Example 1

An asymmetric hollow-fiber membrane was formed from a polyimide, MATRIMID® 5218 (commercially available from Ciba-Giegy Corp.) as described in U.S. Patents 5,015,270 and 4,983,191. A spinning solution was prepared with 27.5% ± 0.5% wt MATRIMID® and 3.1% wt THERMOGUARD® 230 (commercially available from Atochem Corp.) in N-methyl-2-pyrrolidone.

The solution was extruded through a hollow fiber spinnerette with fiber channel dimensions of outer diameter 22 mils (0.056 cm) and inner diameter 10 mils (0.025 cm) at a solution flowrates of 1.63cm$^3$/min. A solution of 90% N-methyl-2-pyrrolidone in water was injected into the bore of the nascent fiber at a rate of 0.55 cm$^3$/min. The spun fiber was passed through an air gap of 2.5 to 5 cm at room temperature into a water coagulant bath maintained at 27°C and collected at a take-up speed of 80m/min.

The water-wet fiber was solvent-exchanged and dried as taught in U.S. Patent 4,080,744; 4,120,098; and EPO No. 219,878. This specifically involved the sequential replacement of water with methanol, the replacement of methanol with hexane, and drying in a sweep of hot nitrogen.

The fiber was cut and formed into 600-fiber bundles approximately one meter long. The bundles were built into small test permeators by potting the open ends of the fiber in an epoxy resin within a stainless steel tube. The permeator design was suited for both tube-feed and shell feed countercurrent gas separation, as well as single-gas permeation testing.

The gas separation performance of the hollow-fiber membrane was measured--before and after treatment with fluorocarbon-- in tube-feed air separation, generally producing a nonpermeate stream of 90 to 99.5% inerts ($N_2$ + Ar) from 100 psig compressed air, and measuring the flowrate and purity of the permeate and nonpermeate streams. The $O_2$ permeance and the $O_2/N_2$ selectivity were calculated from the measured air separation data.

After gas separation tests on the untreated membrane. the membrane was treated with several solutions ofTEFLON® AF fluoropolymer in the fluorinated solvents and concentrations identified in Table I. TEFLON® AF is a dipolymer of perfluoro-2,2-dimethyl-1,3-dioxole, commercially available from E. I. du Pont de Nemours and Company. This was accomplished by contacting the shell side of the membrane with the TEFLON® AF solutions for the contact time specified in Table I, in the test permeators. The permeators were then dried and retested. The membranes exhibited the permeation properties and EST before and after the treatment reported in Table I.

**Table I**

**Permeation data for hollow-fiber membrane treated with TEFLON® AF**

| ***Untreated*** | | | ***Treatment*** | | | ***Treated*** | | |
|---|---|---|---|---|---|---|---|---|
| $O_2$ Permeance | $O_2/N_2$ | EST | Solvent | Concentration of TEFLON® AF | Contact Time | $O_2$ Permeance | $O_2/N_2$ | EST |
| 83 GPU | 1.66 | 320Å | FREON® E1 | 1.0% wt | 120 min | 34.8 GPU | 6.50 | 380Å |
| 85 GPU | 1.80 | 280Å | FREON® E1 | 1.0% wt | 15 min | 43.3 GPU | 6.80 | 303Å |
| 80 GPU | 1.66 | 325Å | FREON® E1 | 1.0% wt | 15 min | 36.4 GPU | 6.65 | 362Å |
| 83 GPU | 1.76 | 290Å | FREON® E1 | 1.0% wt | 3 min | 29.7 GPU | 5.58 | 460Å |
| 94 GPU | 1.67 | 275Å | Perfluoro tetrahydrofuran | 1.0% wt | 15 min | 36.6 GPU | 6.33 | 360Å |
| 91 GPU | 1.65 | 290Å | Perfluorohexane | 1.0% wt | 15 min | 38.7 GPU | 5.92 | 350Å |

*All data derived from $N_2$-enrichment tests, at 21-24°C, 100 psig, and 95% inerts.*

EXAMPLE 2.

A two-layer hollow-fiber membrane was formed from two polyimides, MATRIMID® 5218(commercially available from Ciba Geigy Corp.) and ULTEM® 1000 (commercially available from General Electric Corp.) as described in U.S. Patent 5,085,676. A first spinning solution was prepared with 25.5% ± 1% wt solids content of MATRIMID® in N-methyl-2-pyrrolidone. A second spinning solution was prepared with 31 ± 1% wt solids content of 9:1 ULTEM®/MATRIMID® in N-methyl-2-pyrrolidone.

The above solutions were coextruded through a composite hollow-fiber spinnerette with fiber channel dimensions of outer diameter 22 mils (0.056 cm) and inner diameter equal to 10 mils (0.025 cm) at solution flowrates of 1.53 $cm^3$/min (first solution) and 0.2 $cm^3$/min (second solution). A solution of 90% N-methyl-2-pyrrolidone in water was injected into the fiber bore at a rate of 0.81 $cm^3$/min. The spun fiber passed through an air gap of 2.5 to 5 cm at room temperature into a water coagulant bath maintained at 27°C. The fiber was collected at a take-up speed of 90m/min.

The water-wet fiber was solvent-exchanged, dried and formed into 600-fiber test permeators as in Example 1.

The shell-side of the fiber was contacted with treatment solutions ofTEFLON® AF fluoropolymer in the fluorinated solvents specified in table II for 15 minutes. The membranes exhibited the permeation properties and EST before and after the treatment reported in Table II.

## Table II

**Permeation data with hollow-fiber membrane treated with TEFLON® AF**

| *Untreated* | | | *Treatment* | | *Treated* | | |
|---|---|---|---|---|---|---|---|
| $O_2$ Permeance | $O_2/N_2$ | EST | Solvent | Concentration of TEFLON® AF | $O_2$ Permeance | $O_2/N_2$ | EST |
| 75 GPU | 4.84 | 270Å | FREON® E1 | 0.2% wt | 67 GPU | 5.92 | 290Å |
| 176 GPU | 1.61 | 225Å | FREON® E1 | 1% wt | 76 GPU | 5.8 | 260Å |
| 249 GPU | 1.35 | 220Å | FREON® E1 | 1% wt | 66 GPU | 6.25 | 290Å |
| 142 GPU | 1.85 | 235Å | FREON® E1 | 1% wt | 58 GPU | 6.5 | 330Å |
| 160 GPU | 1.73 | 225Å | FREON® E1 | 1% wt | 57 GPU | 6.41 | 340Å |
| 64 GPU | 2.5 | 305Å | FREON® E1 | 1% wt | 57 GPU | 6.15 | 340Å |
| 119 GPU | 2.5 | 220Å | 1,1,2,2,3,4-hexafluoro-3,4-bis(trifluoromethyl cyclobutane) | 1% wt | 51 GPU | 6.4 | 380Å |
| 176 GPU | 2.0 | 175Å | FREON® E2 | 1% wt | 53 GPU | 5.8 | 270Å |
| 85 GPU | 3.2 | 275Å | FREON® E2 | 1% wt | 42 GPU | 6.5 | 460Å |

*All data derived from $N_2$-enrichment tests, at 21-24°C, 100 psig, and 95% inerts.*

EXAMPLE 3

The permeation properties of the hollow-fiber membranes of Examples 1 and 2 following post-treatment of the membranes with a 1% solution of TEFLON® AF in FREON® E1 solvent were examined at different temperatures. The membranes exhibited the oxygen flux shown in Figure 1 and the Oxygen/Nitrogen selectivity shown in Figure 2.

EXAMPLE 4

The single gas permeation properties of the hollow-fiber membranes of Examples 1 and 2 following post-treatment of the membranes with a 1% solution of TEFLON® AF in FREON® E1 solvent were examined for Neon, Argon, Oxygen (mixed gas), Nitrogen (mixed gas), Nitrogen, Methane and Ethane. The results are reported in Table III.

TABLE III

| | Membrane of Example 1 | | Membrane of Example 2 | |
|---|---|---|---|---|
| | Permeance (GPU) | Permeance/$N_2$ Permeance | Permeance (GPU) | Permeance/$N_2$ Permeance |
| **Ne** | 107 | 17.1 | 175 | 15.2 |
| **Ar** | 14.0 | 2.25 | 25 | 2.0 |
| **$O_2$, mixed-gas** | 42 | 6.6 | 70 | 6.1 |
| **$N_2$, mixed-gas** | 6.3 | | 11.5 | |
| **$N_2$** | 6.2 | 1.0 | 11.5 | 1.0 |
| **$CH_4$** | 5.2 | 0.84 | 9.3 | 0.81 |
| **$C_2H_6$** | | | 5.4 | 0.47 |

*Measurements with pure gases, 100 psig tube-feed, 23°C.*

## Claims

1. A membrane for the separation of fluids comprising a membrane coated with a coating of a fluoropolymer having an aliphatic ring structure containing fluorine, wherein the primary fluid separating function is provided by the membrane.

2. A membrane of claim 1 wherein the fluoropolymer comprises the group of repeating units represented by the following general formulas:

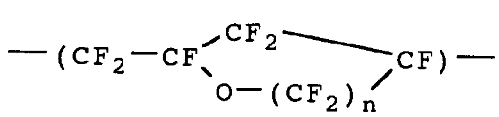

or

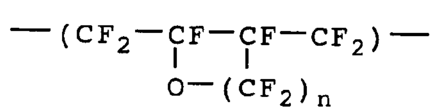

where n is an integer of 1 or 2; and copolymers thereof.

3. A membrane according to one of claims 1 and 2 wherein the polymer is an amorphous polymer of perfluoro-2,2-dimethyl-1,3-dioxole.

4. The membrane of claim 3 in which the polymer is a copolymer of perfluoro-2,2-dimethyl-1,3-dioxole.

5. The membrane of claim 4 in which the polymer is a copolymer of perfluoro-2,2-dimethyl-1,3-dioxole and a complementary amount of at least one monomer selected from tetrafluoroethylene, perfluoromethyl vinyl ether, vinylidene fluoride and chlorotrifluoroethylene.

6. The membrane according to claim 3 in which the polymer is a homopolymer of perfluoro-2,2-dimethyl-1,3-dioxole.

7. The membrane according to one of claims 3 to 5 in which the polymer is a dipolymer of perfluoro-2,2-dimethyl-1,3-dioxole and a complementary amount of tetrafluoroethylene.

8. The membrane of claim 7 in which the polymer is a dipolymer containing 65-99 mole % of perfluoro-2,2-dimethyl-1,3-dioxole and having a glass transition temperature of at least 100°C.

9. A membrane according to one of claims 1 to 8 wherein the membrane is in sheet form having a thickness from about 1 µm to about 300 µm.

10. A membrane according to one of claims 1 to 8 wherein the membrane is in the form of hollow fibers, having a diameter from about 50 µm to about 1000 µm diameter and with a wall thickness of about 10 µm to about 300 µm.

11. A membrane according to one of claims 1 to 10 wherein the membrane is of asymmetrical construction.

12. A membrane according to one of claims 1 to 11 wherein the coating of fluoropolymer on the membrane is a non-continuous coating.

13. A membrane according to one of claims 1 to 12 wherein the coating of fluoropolymer on the membrane is a continuous coating.

14. A process for separating fluids comprising passing a mixture of fluids through the membrane according to one of claims 1 to 13.

15. A process for posttreating a fluid separation membrane comprising applying to the membrane a fluoropolymer having an aliphatic ring structure containing fluorine.

16. The process of claim 15 wherein the polymer comprises the group of repeating units represented by the following general formulas:

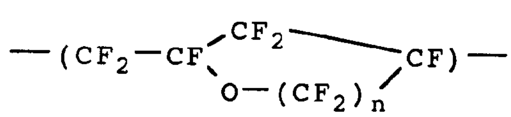

or

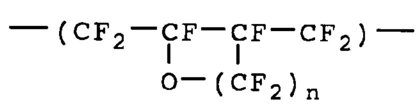

where n is an integer of 1 or 2; and copolymers thereof.

17. The process of claim 15 or 16 wherein the application of the polymer improves the permselectivity of the membrane with respect to at least two gases.

FIG.1

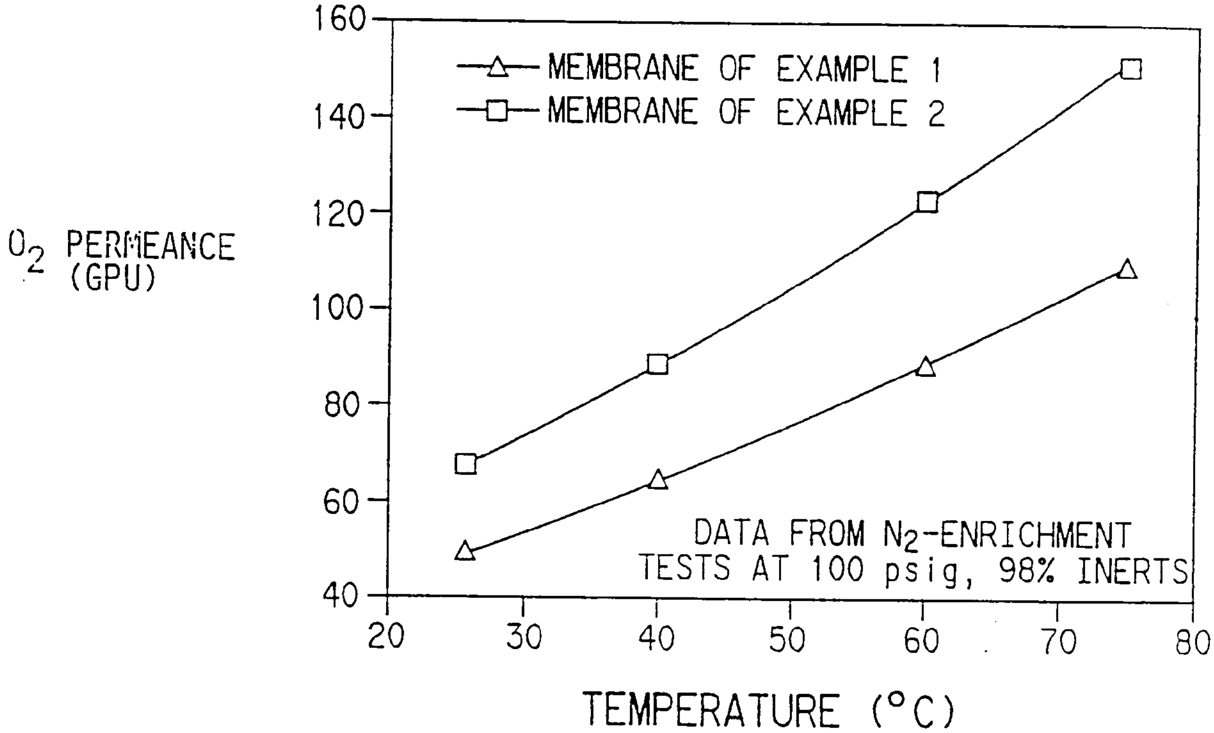
160
140
120
100
80
60
40
$O_2$ PERMEANCE (GPU)
MEMBRANE OF EXAMPLE 1
MEMBRANE OF EXAMPLE 2
DATA FROM $N_2$-ENRICHMENT
TESTS AT 100 psig, 98% INERTS
20
30
40
50
60
70
80
TEMPERATURE (°C)

FIG.2

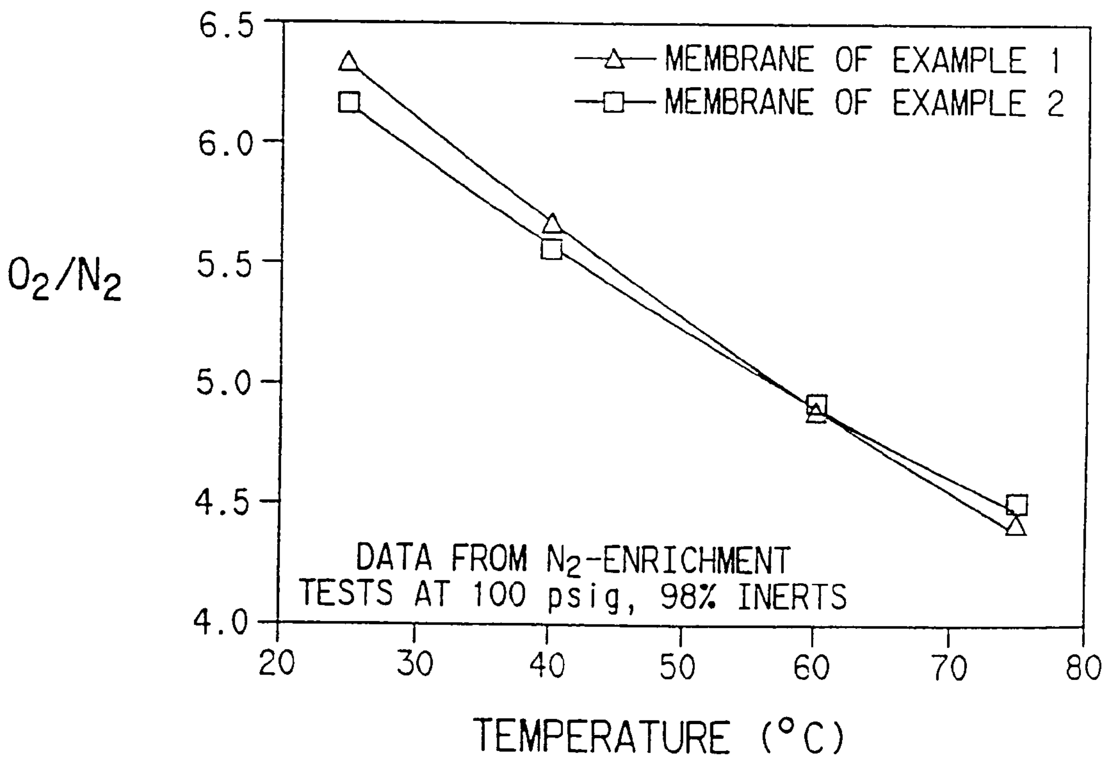
6.5
6.0
5.5
5.0
4.5
4.0
$O_2/N_2$
MEMBRANE OF EXAMPLE 1
MEMBRANE OF EXAMPLE 2
DATA FROM $N_2$-ENRICHMENT
TESTS AT 100 psig, 98% INERTS
20
30
40
50
60
70
80
TEMPERATURE (°C)

European Patent Office

# EUROPEAN SEARCH REPORT

Application Number
EP 94 40 2350

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DATABASE WPI Week 8845, Derwent Publications Ltd., London, GB; AN 88-320160 & JP-A-63 238 111 (ASAHI GLASS) * abstract * | 1,2, 15-17 | B01D67/00 B01D71/44 |
| X | DATABASE WPI Week 8850, Derwent Publications Ltd., London, GB; AN 88-356123 & JP-A-63 264 101 (ASAHI GLASS) * abstract * | 1,2, 15-17 | |
| X | WO-A-92 09353 (W.L.GORE & ASSOCIATES) * the whole document * | 1-8, 15-17 | |
| X | WO-A-90 15662 (DU PONT) * the whole document * | 1-8, 15-17 | |
| D | & US-A-5 051 114 | | TECHNICAL FIELDS SEARCHED (Int.Cl.6) B01D |
| X | EP-A-0 461 852 (DU PONT) * claim 1 * | 1-8, 15-17 | |
| X | EP-A-0 461 853 (DU PONT) * examples * | 1-8, 15-17 | |
| A | EP-A-0 073 087 (DU PONT) * claims * | 1-8, 15-17 | |
| D | & US-A-4 754 009 | | |

The present search report has been drawn up for all claims

| Place of search | Date of completion of the search | Examiner |
|---|---|---|
| BERLIN | 30 November 1994 | Cordero Alvarez, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)